(19) Europäisches Patentamt / European Patent Office / Office européen des brevets

(11) **EP 4 213 044 B1**

(12) **EUROPEAN PATENT SPECIFICATION**

(45) Date of publication and mention
of the grant of the patent:
**27.11.2024 Bulletin 2024/48**

(21) Application number: **20957653.7**

(22) Date of filing: **14.10.2020**

(51) International Patent Classification (IPC):
*G06F 21/51* (2013.01)     *G06F 16/9532* (2019.01)
*G06F 21/56* (2013.01)     *G06F 16/951* (2019.01)
*G06F 21/55* (2013.01)

(52) Cooperative Patent Classification (CPC):
**G06F 16/951; G06F 21/51; G06F 21/552;
G06F 21/554; G06F 21/56**

(86) International application number:
**PCT/JP2020/038733**

(87) International publication number:
**WO 2022/079824 (21.04.2022 Gazette 2022/16)**

(54) **COLLECTION DEVICE, COLLECTION METHOD, AND COLLECTION PROGRAM**

SAMMELVORRICHTUNG, SAMMELVERFAHREN UND SAMMELPROGRAMM

DISPOSITIF DE COLLECTE, PROCÉDÉ DE COLLECTE, ET PROGRAMME DE COLLECTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.07.2023 Bulletin 2023/29**

(73) Proprietor: **Nippon Telegraph And Telephone
Corporation
Chiyoda-ku
Tokyo 100-8116 (JP)**

(72) Inventors:
• **NAKANO, Hiroki
Musashino-shi, Tokyo 180-8585 (JP)**
• **CHIBA, Daiki
Musashino-shi, Tokyo 180-8585 (JP)**

(74) Representative: **Hoffmann Eitle
Patent- und Rechtsanwälte PartmbB
Arabellastraße 30
81925 München (DE)**

(56) References cited:
CN-A- 109 472 027     US-A1- 2011 087 648
US-A1- 2013 179 421     US-A1- 2020 234 109
US-B1- 9 083 729

**Description**

[Technical Field]

The present invention relates to a collection device, a collection method, and a collection program.

[Background Art]

Social engineering (SE) attacks which abuse vulnerabilities in user psychology are becoming mainstream as threats on the Web. As a route leading to a malicious website, user-generated content such as videos, blogs, and bulletin board postings generated by attackers in online services and posted on the Web is increasing.

On the other hand, user-generated content generated by an attacker is intensively generated in large quantities in real time targeting a specific event such as a concert or sport and is spread on a large number of services under the guise of a legitimate user. Therefore, a wide range of detection techniques that are quick and highly accurate are anticipated.

For example, conventionally, a search engine is used to detect a malicious site and create a query for recursively searching for a malicious site (see NPL 1).

[Citation List]

[Non Patent Literature]

[NPL 1] Luca Invernizzi, Paolo Milani Comparetti, "EVILSEED: A Guided Approach to Finding Malicious Web Pages," [online], [retrieved on July 27, 2020], Internet <URL:https://sites.cs.ucsb.edu/~vigna/publications/2012_SP_Evilseed.pdf> [Patent Literature]

US 20130179421 A1 describes collecting URL information using a retrieval service of a social network service. A search word collecting module periodically collects ranked real-time search word information provided through a search site. URL information of posts exchanged in a social network is extracted based on the search word information and a repetition within a preset time of the URL information is detected.

CN 109472027 A describes detecting an online water army, including uniformly planning honeypot accounts, determining the posting and attention paying strategy of the honeypot accounts and detecting the account of a robot from collected accounts. An account characteristic vector with multiple dimensions is detected and the online water army for the collected accounts is determined according to the degree for the account characteristic vector conforming to a robot account characteristic.

US 2020234109A1 describes implementing a social engineering cognitive system. A social engineering classifier classifies documents in a corpus as to whether they are associated with a social engineering communication. Key features from the documents in a detected set of SEC related documents are retrieved. Based thereon newly received electronic communication is analyzed to determine whether or not the newly received electronic communication is an SEC.

US 9083729B1 describes determining malicious uniform resource locators posted on a social networking platform. Contextual data from the social networking platform that describes at least one instance of the uniform resource locator within the social networking platform is gathered and based on the contextual data a social fingerprint of the uniform resource locator is obtained. The uniform resource locator is determined as malicious or not based thereon.

[Summary of Invention]

[Technical Problem]

However, the related art is insufficient in terms of detection accuracy, detection speed, and detection range. For example, the technique described in NPL 1 has a problem that it is necessary to access a malicious site and the detection speed is slow.

The present invention has been made in view of the foregoing circumstances, and an object of the present invention is to detect a malicious site in a wide range quickly and with high accuracy.

[Solution to Problem]

The above-mentioned problem is solved and the object is achieved by the subject matter of claim 1. Advantageous embodiments are disclosed in the dependent claims.

[Advantageous Effects of Invention]

According to the present invention, it is possible to detect a malicious site in a wide range quickly and with high accuracy.

[Brief Description of Drawings]

[Fig. 1]

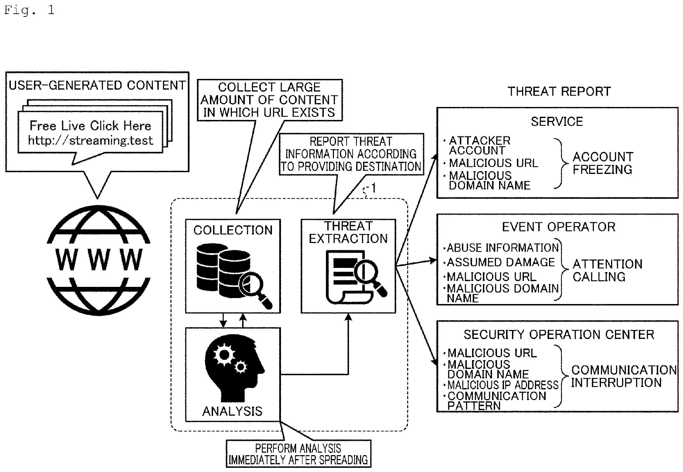

Fig. 1 is a diagram for describing an overview of a detection device according to an embodiment.
[Fig. 2]

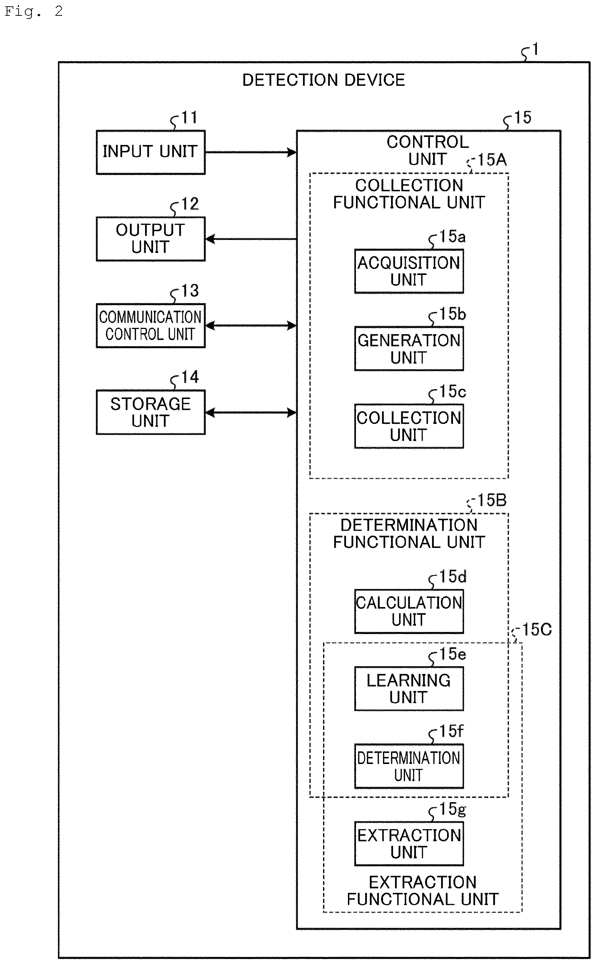

Fig. 2 is a schematic diagram illustrating a schematic configuration of the detection device according to the present embodiment.
[Fig. 3]

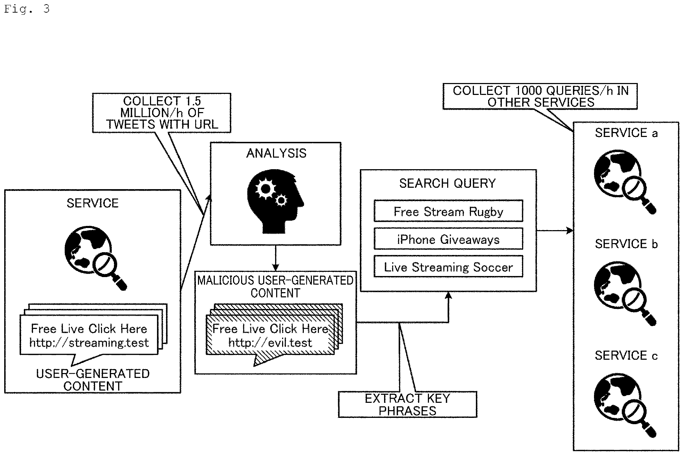

Fig. 3 is a diagram for describing processing of a collection functional unit.
[Fig. 4]

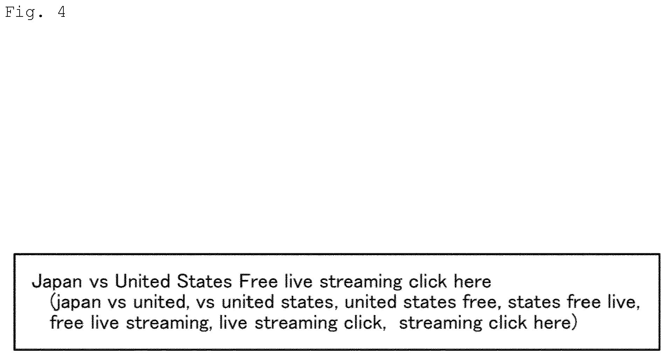

Fig. 4 is a diagram for describing processing of a generation unit.
[Fig. 5]

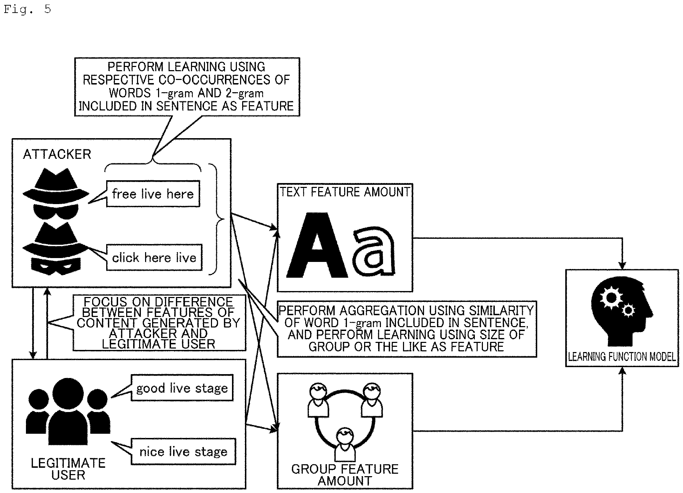

Fig. 5 is a diagram for describing processing of a determination functional unit.
[Fig. 6]

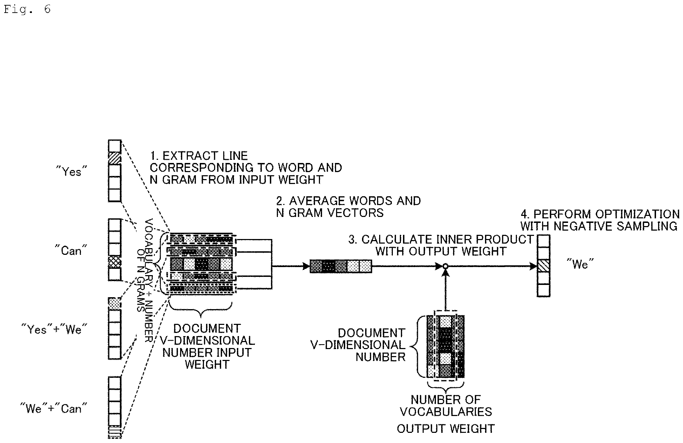

Fig. 6 is a diagram for describing processing of a calculation unit.
[Fig. 7]

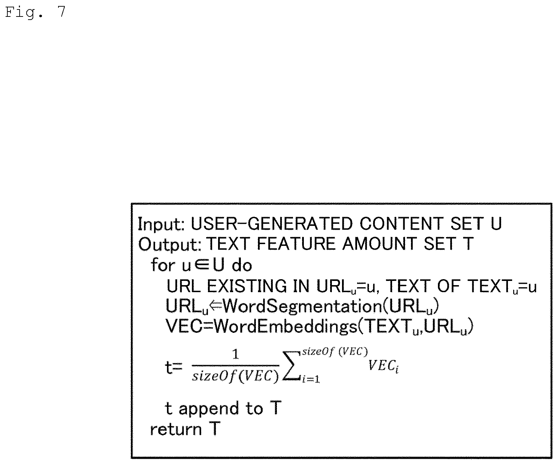

Fig. 7 is a diagram for describing processing of the calculation unit.
[Fig. 8]

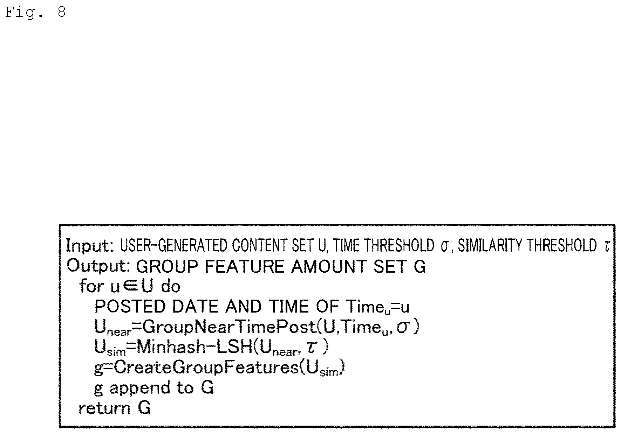

Fig. 8 is a diagram for describing processing of the calculation unit.
[Fig. 9]

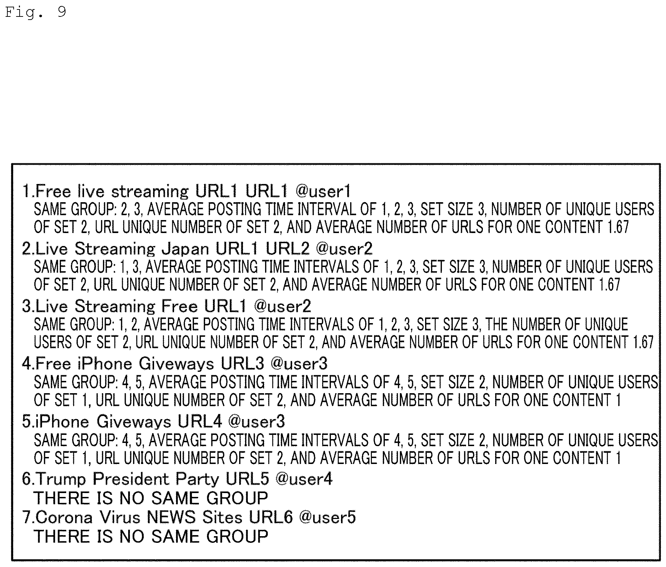

Fig. 9 is a diagram for describing processing of the calculation unit.
[Fig. 10]

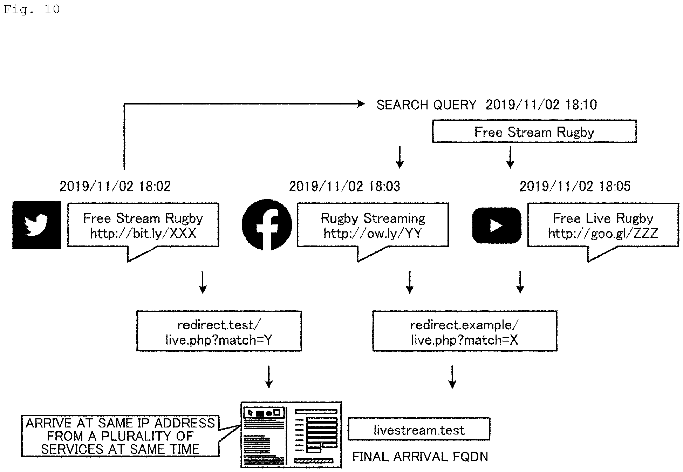

Fig. 10 is a diagram for describing processing of an extraction functional unit.
[Fig. 11]

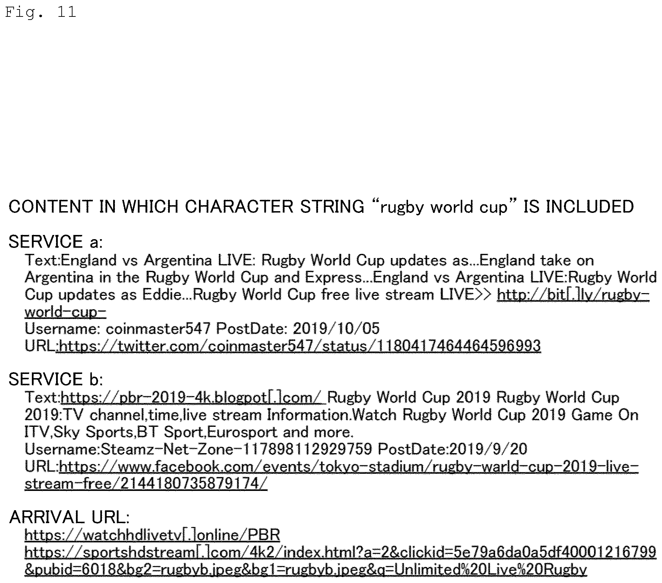

Fig. 11 is a diagram for describing threat information.
[Fig. 12]

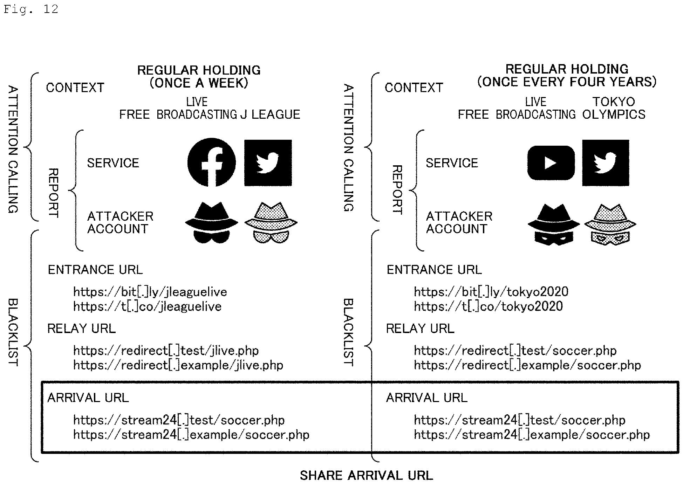

Fig. 12 is a diagram for describing threat information.
[Fig. 13]

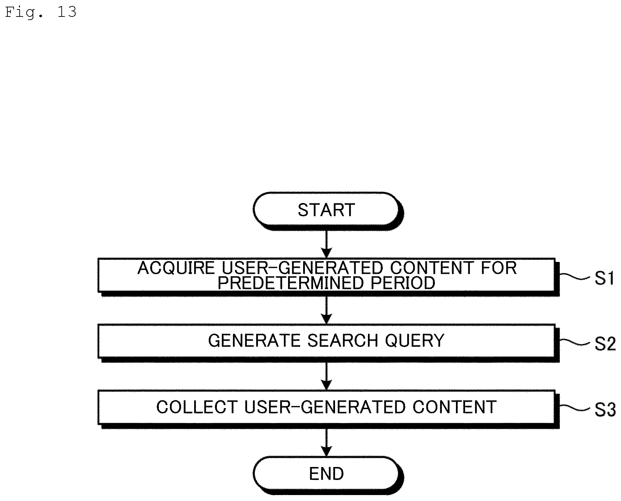

Fig. 13 is a flowchart illustrating a processing procedure of the collection functional unit.
[Fig. 14]

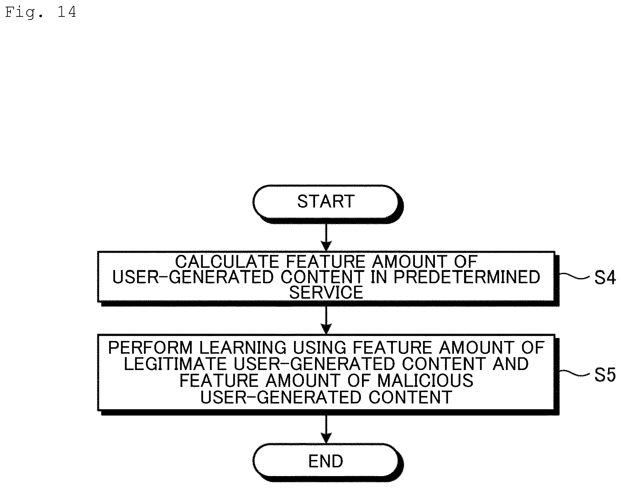

Fig. 14 is a flowchart illustrating a processing procedure of the determination functional unit.
[Fig. 15]

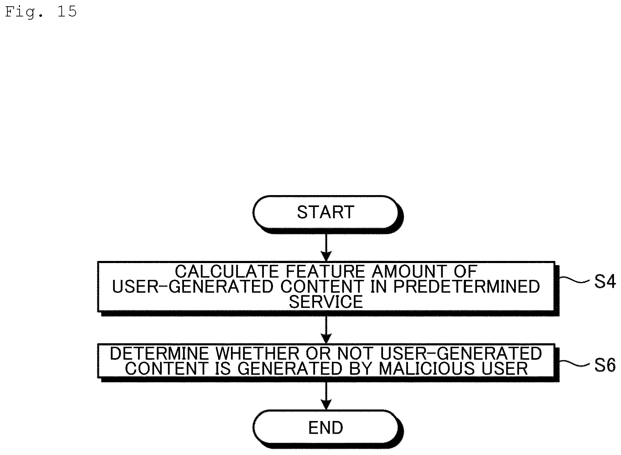

Fig. 15 is a flowchart illustrating a processing procedure of the determination functional unit.
[Fig. 16]

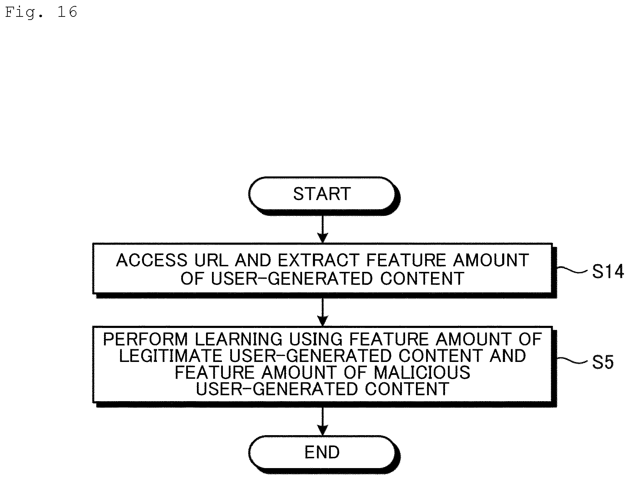

Fig. 16 is a flowchart illustrating a processing procedure of the extraction functional unit.
[Fig. 17]

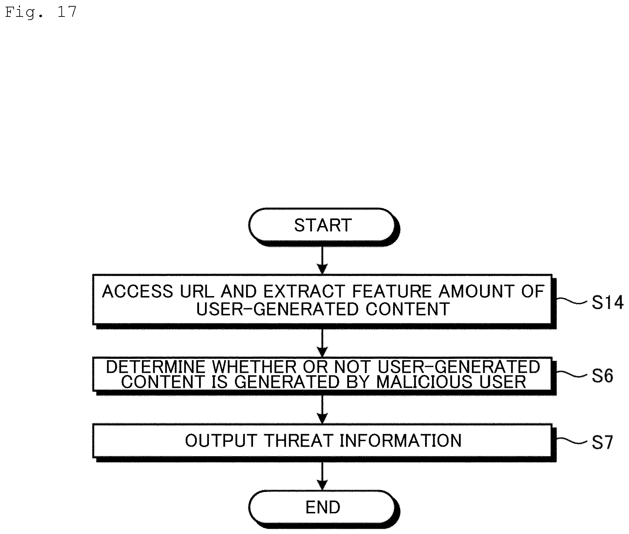

Fig. 17 is a flowchart illustrating a processing procedure of the extraction functional unit.
[Fig. 18]

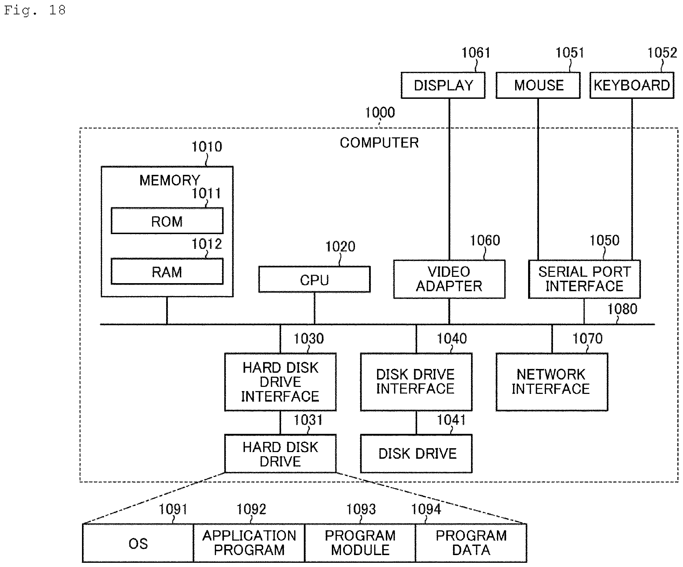

Fig. 18 is a diagram illustrating an example of a computer for executing a detection program.

[Description of Embodiments]

Hereinafter, an embodiment of the present invention will be described in detail with reference to the drawings. The present invention is not limited to the present embodiment. Further, in the description of the drawings, the same parts are denoted by the same reference signs.
[Overview of Detection Device] Fig. 1 is a diagram for describing an overview of a detection device. A detection device 1 according to the present embodiment collects and analyzes user-generated content such as videos, blogs, and bulletin board postings generated by a user in an online service such as Facebook (registered trademark) or Twitter (registered trademark) and posted on the Web.
Specifically, attention is focused on an attacker generating and spreading a large amount of user-generated content intensively for an event that a user is interested in and for which user-generated content is generated in a similar context that makes a user want to access a malicious site.

Then, the detection device 1 efficiently collects user-generated content having a high possibility of being malicious content from an attacker and analyzes whether or not it is malicious using the feature that user-generated content by an attacker is spread in a similar context at a specific timing. Furthermore, when it is determined that the content is malicious user-generated content as a result of the analysis, the detection device 1 extracts, from the malicious user-generated content, threat information which is a feature that may become a threat, and outputs a threat report.

For example, the detection device 1 extracts similar contexts of user-generated content to generate a search query, and efficiently collects user-generated content having a high possibility of being malicious by using the search query. In addition, a maliciousness determination is performed on a large amount of user-generated content of a specific service generated at the same time by learning a feature difference between user-generated content generated by an attacker and user-generated content generated by a legitimate user, specialized for a specific service.

Further, in an arbitrary service, the detection device 1 learns a feature difference of Web content obtained by accessing a URL described in user-generated content about the user-generated content generated by the attacker and the user-generated content generated by the legitimate user. Also, the detection device 1 uses the learned feature difference to perform a maliciousness determination on user-generated content generated in large quantities in an arbitrary service at the same time.

Furthermore, when it is determined that the content is malicious user-generated content, the detection device 1 extracts, from the malicious user-generated content, threat information which is a feature that may become a threat, and outputs a threat report. In this way, the detection device 1 detects an attack that may become a threat in real time.

[Configuration of Detection Device] Fig. 2 is a schematic diagram illustrating a schematic configuration of the detection device according to the present embodiment. As illustrated in Fig. 2, the detection device 1 of the present embodiment includes a collection functional unit 15A, a determination functional unit 15B, and an extraction functional unit 15C. These functional units may be implemented in hardware different from that of the detection device 1. That is, the detection device 1 may be implemented as a detection system having a collection device, a determination device, and an extraction device.

The detection device 1 is realized as a general-purpose computer such as a personal computer and includes an input unit 11, an output unit 12, a communication control unit 13, a storage unit 14, and a control unit 15.

The input unit 11 is realized by using an input device such as a keyboard or a mouse, and inputs various types of instruction information, such as start of processing, to the control unit 15 in response to an input operation by an operator. The output unit 12 is realized by a display device such as a liquid crystal display or a printing device such as a printer. For example, the output unit 12 displays a result of a detection process to be described later.

The communication control unit 13 is realized by a network interface card (NIC) or the like, and controls communication between the control unit 15 and an external device via a telecommunication line such as a local area network (LAN) or the Internet. For example, the communication control unit 13 controls communication between a server or the like that manages user-generated content or the like of each service and the control unit 15.

The storage unit 14 is realized by, for example, a semiconductor memory element such as a random access memory (RAM) or a flash memory, or a storage device such as a hard disk or an optical disc. A processing program for operating the detection device 1, data used during execution of the processing program, and the like are stored in advance in the storage unit 14 or are stored temporarily each time the processing is performed. Note that the storage unit 14 may also be configured to communicate with the control unit 15 via the communication control unit 13.

In the present embodiment, the storage unit 14 stores threat information and the like obtained as a result of the detection process to be described later. Further, the storage unit 14 may store user-generated content acquired from a server or the like of each service by an acquisition unit 15a to be described later prior to the detection process.

The description will now return to Fig. 2. The control unit 15 is realized using a central processing unit (CPU) or the like, and executes a processing program stored in a memory. Accordingly, the control unit 15 functions as the collection functional unit 15A, the determination functional unit 15B, and the extraction functional unit 15C, as illustrated in Fig. 2.

The collection functional unit 15A includes an acquisition unit 15a, a generation unit 15b, and a collection unit 15c. The determination functional unit 15B includes a calculation unit 15d, a learning unit 15e, and a determination unit 15f. The extraction functional unit 15C includes an extraction unit 15g, the learning unit 15e, and the determination unit 15f.

Note that each or some of these functional units may be implemented in different hardware. For example, as described above, the collection functional unit 15A, the determination functional unit 15B, and the extraction functional unit 15C may be implemented in different hardware as a collection device, a determination device, and an extraction device, respectively. Further, the control unit 15 may include another functional unit.

[Collection Functional Unit] Fig. 3 is a diagram for describing processing of a collection functional unit. As shown in Fig. 3, the collection functional unit 15A extracts a similar context as a key phrase from a user-generated content group generated at the same time in a certain service, and generates a search query. Further, the collection functional unit 15A efficiently collects user-generated content of an arbitrary service having a high possibility of being malicious by using the generated search query of the key phrase having a high possibility of being malicious.

The description will now return to Fig. 2. The acquisition unit 15a acquires user-generated content generated in each service in a predetermined period. Specifically, the acquisition unit 15a acquires user-generated content from a server or the like of each service via the input unit 11 or the communication control unit 13.

For example, the acquisition unit 15a acquires user-generated content in which a URL is described for a predetermined service. In this case, the acquisition unit 15a may acquire user-generated content periodically at predetermined time intervals or by designating a time posted using the term "since" or "until." Further, the acquisition unit 15a may limit and acquire the user-generated content in which the URL is described by using the term "filters." Thus, the acquisition unit 15a can acquire user-generated content in which the URL of the external site is described in real time.

The acquisition unit 15a may store the acquired user-generated content in the storage unit 14, for example, prior to processing of the generation unit 15b to be described later.

The generation unit 15b generates a search query by using words that appear in the user-generated content for each service. For example, the generation unit 15b generates a search query by using a combination of words that appear.

Specifically, the generation unit 15b converts the acquired user-generated content into a feature vector having a predetermined number of dimensions. For example, the generation unit 15b uses a vector of distributed representation of words representing a combination of words appearing in each user content as a feature vector of the user-generated content in a vector space in which the vocabulary that appears in the user-generated content, that is, a total of the words that appear is represented. Furthermore, the generation unit 15b learns a model of the distributed representation of words in advance and applies a sentence summarization technique. That is, the sentence summarization technique extracts a combination of words in a distributed representation similar to the distributed representation of the entire target sentence (text) as a key phrase.

Thus, the generation unit 15b extracts a key phrase representing the context of each user-generated content. In addition, the generation unit 15b generates a search query for searching for user-generated content including the extracted key phrase.

Specifically, the generation unit 15b calculates a similarity between the entire text generated by the user-generated content and a key phrase candidate according to the following Equation (1). Here, doc is the entire target sentence, C is a key phrase candidate, and K is a set of extracted word combinations (phrases).

[Math. 1]

$$KeyPhraseScore := \arg \max_{C_i \in C/K} \left[ \lambda \cdot cos_{sim}\left(C_i, doc\right) - (1 - \lambda) \max_{C_j \in K} cos_{sim}\left(C_i, C_j\right) \right]$$

$$\cdots (1)$$

By changing λ in the above Equation (1), it is possible to extract various key phrases.

For example, the generation unit 15b extracts a combination of words by an n-gram method for extracting n consecutive words from the text. Furthermore, a generation unit 15b calculates a cosine similarity between the entire text of the user-generated content and each phrase of the extracted n-gram by the above Equation (1), and extracts the largest phrase among phrases whose calculated similarity value is higher than a predetermined threshold as a key phrase.

Here, Fig. 4 is a diagram for describing processing of the generation unit 15b. In the example shown in Fig. 4, the generation unit 15b extracts word combinations by 3-gram. In addition, the generation unit 15b extracts a key phrase by calculating the cosine similarity between the entire text of the user-generated content "Japan vs United States Free live streaming click here" and each 3-gram phrase "japan vs united," "vs united states," "united states free," and so on.

Alternatively, the generation unit 15b generates the search query by using the frequency of appearance of each word. For example, the generation unit 15b aggregates frequencies of appearance of the 2-gram phrase and the 3-gram phrase in the text of user-generated content acquired in a predetermined period. Also, the generation unit 15b extracts a phrase whose appearance frequency is equal to or higher than a predetermined threshold as a key phrase, and generates a search query for searching for user-generated content including the key phrase.

For example, the generation unit 15b extracts a 3-gram phrase from the text of all user-generated content posted every hour for 24 hours on March 1, and calculates the appearance frequency of each phrase. Subsequently, the generation unit 15b extracts, as key phrases, phrases having statistically abnormal values (outliers) from the 3-gram phrases that appeared in user-generated content for one hour from 0:00 to 1:00 on March 2, the next day. That is, the generation unit 15b uses this phrase as a key phrase when a large amount of user-generated content including a phrase which does not normally appear is posted at a specific timing.

For example, the generation unit 15b calculates a positive outlier using a z-score. In the example shown in Fig. 4, for the phrase "japan vs united," it is assumed that the number of appearances every hour for 24 hours on March 1 is 0, 0, 0, 2, 4, 10, 2, 5, 10, 2, 4, 5, 6, 2, 2, 5, 12, 20, 15, 20, 10, 20, 25, and 30, respectively. An average in this case is 8.792 times and a standard deviation is 8.602.

It is also assumed that this phrase appears 50 times in one hour from 0:00 to 1:00 on March 2. The z-score in this case is calculated as $Z=(50-8.792)/8.602=4.790$. Furthermore, the generation unit 15b uses this phrase "japan vs united" as a key phrase to generate a search query for searching for user-generated content including this key phrase when the outlier threshold is 1.96 corresponding to a significant frequency of appearance of 5%.

In addition, the generation unit 15b selects a search query that can be malicious for each service. For example, the generation unit 15b calculates the degree of maliciousness of the generated search query on the basis of the search query used for searching for the user-generated content which is most recently determined to be malicious for each service. Also, the generation unit 15b selects a search query whose degree of maliciousness is equal to or higher than a predetermined threshold as a search query of the service.

Here, the generation unit 15b calculates, as the degree of maliciousness of the search query, a ratio of the number of user-generated contents determined to be malicious by using the number of user-generated contents searched using this search query and determined to be malicious or benign in the past 24 hours. Furthermore, the generation unit 15b calculates an average value of the degree of maliciousness of each word of the key phrase as the maliciousness of the detection query.

For example, it is assumed that the number of malicious user-generated contents searched using the search query of the key phrase "rugby world cup streaming" is 20 and the number of benign user-generated contents is 50 in a service which has been performed in the past 24 hours. Also, it is assumed that the number of malicious user-generated contents searched using the search query of the key phrase "free live streaming" is 100, and the number of benign user-generated contents is 100. Also, it is assumed that the number of malicious user-generated contents searched using the search query of the key phrase "rugby japan vs korea" is 10, and the number of benign user-generated contents is 100.

In this case, the degree of maliciousness of the word "japan" is $\alpha=10/(10+100)$. In addition, the degree of maliciousness of the word "rugby" is $\beta=\{20/(20+50)+10/(10+100)\}/2$. Further, the degree of maliciousness of the word "streaming" is $y=\{20/(20+50)+100/(100+100)\}/2$.

Therefore, the score of the degree of maliciousness of the search query of the key phrase "japan rugby streaming" is calculated as $(\alpha+\beta+\gamma)/3=0.225$.

In this way, the generation unit 15b calculates the degree of maliciousness of the search query for each service, and selects the search query whose calculated degree of maliciousness is equal to or higher than a threshold as the search query for the user-generated content that can be malicious for the service.

The collection unit 15c collects user-generated content generated in a plurality of services by using the generated search query. For example, the collection unit 15c collects user-generated content of another service by using a search query generated by the user-generated content of a certain service. In addition, the collection unit 15c also collects a plurality of types of user-generated content in each service together with the generated date and time by using the same search query.

For example, the collection unit 15c applies the same search query to three types of collection URLs for a service a in which user-generated content for sentence posting, video posting, and event notification is generated, and collects each of the three types of user-generated content together with the date and time when the content was posted (generated). Further, the collection unit applies the same search query to a common collection URL for a service b in which user-generated content for video posting and video distribution is generated, and collects the two types of user-generated content together with the date and time when the content was posted.

Thus, the collection unit 15c can efficiently collect the user-generated content spread in a similar context at a specific timing. Especially, the collection unit 15c can easily and quickly collect user-generated content having a high possibility of being malicious for each service by using the search query that can be maliciousness selected by the generation unit 15b.

The collection unit 15c collects the user-generated content by providing an upper limit to the collection amount, for example, as 100 queries per hour. Thus, the load of the server of each service being the collection destination can be reduced.

[Determination Functional Unit] Fig. 5 is a diagram for describing processing of the determination functional unit. As shown in Fig. 5, the determination functional unit 15B acquires a machine learning model representing each feature amount by performing learning using a difference in features between the user-generated content generated by the attacker and the user-generated content generated by the legitimate user for a specific service. The determination functional unit 15B learns the machine learning model using a text feature amount representing the co-occurrence of phrases in user-generated content and a group feature amount representing the similarity of words that appear in each user-generated content as a feature amount.

Thus, the determination functional unit 15B can determine whether or not the user-generated content of the service generated thereafter is malicious by using the learned machine learning model. For example, the determination functional unit 15B can perform a maliciousness determination of a large amount of user-generated content of a specific service generated at the same time in real time.

The description will now return to Fig. 2. The calculation unit 15d calculates the feature amount of the user-generated content generated by the user in the predetermined service in the predetermined period. In the present embodiment, the feature amount of the user-generated content includes a text feature amount representing the features of a combination of words co-occurring in a plurality of user-generated contents and a group feature amount representing the features related to word similarity between a plurality of user-generated contents generated in a predetermined period.

Here, Figs. 6 to 9 are diagrams for describing the processing of the calculation unit. First, the calculation unit 15d calculates a text feature amount representing a feature of a combination of words co-occurring in a plurality of user-generated contents. Specifically, the calculation unit 15d calculates the text feature amount of the set of user-generated content by using an optimized word distributed representation model for each of the phrases co-occurring in the collected set of user-generated content.

More specifically, the calculation unit 15d optimizes the model for outputting the feature vector of the distributed representation by the phrase co-occurring in each user-generated content of the set of user-generated content in advance, as shown in Fig. 6. In the example shown in Fig. 6, the calculation unit 15d uses a matrix (refer to 1.) in which each user-generated content (document) is set as each column as an input weight using a word (1-gram phrase) and 2-gram phrase appearing in a set of malicious user-generated content as each line. Furthermore, the calculation unit 15d calculates an average of each line corresponding to each phrase (refer to 2.).

Furthermore, the calculation unit 15d calculates an inner product by using a matrix in which each document is in each line and each word is in each column as the output weight (refer to 3.) and optimizes a model in which a feature vector of the distributed representation of each phrase is output (refer to 4.).

Also, the calculation unit 15d first extracts a word existing in the dictionary from the character string of the URL in the content with respect to the set U of the collected user-generated content and replaces it with the character string of the URL (WordSegmentation), as shown in Fig. 7.

Furthermore, the calculation unit 15d optimizes the distributed representation model for the words (1-gram phrases) and 2-gram phrases that appear in the set U of the user-generated contents in advance, as shown in Fig. 6. Furthermore, the calculation unit 15d generates a set of feature vectors $VEC_u$ of each user-generated content u using the optimized model of distributed representation (WordEmbeddings). In addition, the calculation unit 15d calculates an average of the feature vector $VEC_u$ of each user-generated content u as the text feature amount of the set of user-generated content.

Here, there is a tendency for many similar words to exist in malicious user-generated content also in events at different timings. Therefore, for the set U of malicious user-generated content, the average of the feature vector $VEC_u$ of each user-generated content u calculated as described above can be a feature amount that reflects the features of the set U of user-generated content.

Furthermore, the calculation unit 15d calculates a group feature amount representing a feature related to the similarity of words between a plurality of user-generated contents generated in a predetermined period. Specifically, as shown in Fig. 8, the calculation unit 15d calculates the similarity between the user-generated contents by applying the Minhash-LSH algorithm to the words (1-gram phrases) that appear for the set U of user-generated content collected at the same time. Here, the same time means that a time difference between the generated dates and times is within a predetermined time threshold value σ. Furthermore, the calculation unit 15d sets this set of user-generated content as a set of similar user-generated content when the calculated similarity exceeds the predetermined similarity threshold value τ.

The calculation unit 15d specifies a group feature amount for a similar user-generated content set. The group feature amount includes a size of a set, the number of users in the set, the number of unique URLs described in the set, the average number of URLs described in the user-generated content in the set, or the average posting time interval in the set.

For example, the calculation unit 15d determines whether or not the collected user-generated content set is a similar user-generated content set, and when it is a similar user-generated content set, specifies the group feature amount, as illustrated in Fig. 9.

Fig. 9 illustrates, for example, that the user-generated content 1 is generated by user1 and the appearing word is "Free live streaming URL1." Furthermore, it is exemplified that the user-generated contents 1 to 3 are the same set of similar user-generated contents. Furthermore, it is exemplified as the group feature amount of this similar user-generated content set that the average posting time interval and the set size are 3, the number of unique users of the set is 2 (user1, user2), the URL unique number of the set is 2 (URL1, URL2), and the average number of URLs for one content is 1.67.

Furthermore, it is exemplified that the user-generated contents 4 and 5 are the same set of similar user-generated contents. Furthermore, it is exemplified that the user-generated contents 6 and 7 are not a set of similar user-generated contents.

Here, malicious user-generated content tends to spread at the same time in a similar context. Therefore, it is possible to specify the group feature amount as described above for the malicious user-generated content set. That is, it means that there is a high possibility that this set of user-generated content is malicious when the group feature amount can be specified in this way.

The description will now return to Fig. 2. The learning unit 15e performs learning using the calculated feature amount of the user-generated content generated by the legitimate user and the feature amount of the content generated by the malicious user. Furthermore, the determination unit 15f determines whether or not the user-generated content is generated by a malicious user using the learned model.

Specifically, the learning unit 15e performs supervised learning of a machine learning model using the text feature amount representing the co-occurrence of phrases in user-generated content and a group feature amount representing the similarity of words that appear in each user-generated content. Furthermore, the determination unit 15f uses the learned machine learning model to determine whether or not the user-generated content of the service acquired thereafter is malicious.

In this way, the determination functional unit 15B can learn the features of user-generated content having a possibility of being malicious and is generated at a specific timing such as an event and perform a maliciousness determination of the user-generated content collected in real time by using the learning result.

[Extraction Functional Unit] Fig. 10 is a diagram for describing the processing of the extraction functional unit. As shown in Fig. 10, the extraction functional unit 15C extracts a feature amount of the Web content obtained by accessing the URL included in the user-generated content in an arbitrary service. For example, the extraction functional unit 15C specifies an IP address of a fully qualified domain name (FQDN) at which it will finally arrive.

Furthermore, the extraction functional unit 15C learns the user-generated content generated by the attacker and the user-generated content generated by the legitimate user by using the feature amount. In addition, the extraction functional unit 15C uses the learned feature amount to perform a maliciousness determination on user-generated content generated in large quantities in an arbitrary service at the same time.

Furthermore, when it is determined that the content is malicious user-generated content, the extraction functional unit 15C extracts, from the malicious user-generated content, threat information which is a feature that may become a threat, and outputs a threat report. In this way, the extraction functional unit 15C can detect an attack which can be a threat in real time.

The description will now return to Fig. 2. The extraction unit 15g accesses the entrance URL described in the user-generated content generated by the user in a plurality of services in a predetermined period and extracts the feature amount of the user-generated content. The feature amount extracted herein includes a feature amount related to the Web content of the arrival website and a feature amount related to a plurality of user-generated contents generated in a predetermined period.

Specifically, the extraction unit 15g first accesses the entrance URL using the URL described in the collected user-generated content as the entrance URL and specifies the URL of the site finally reached, that is, the arrival URL. Note that, when the entrance URL uses the URL shortening service, this is used as the entrance URL as it is.

Here, the URL described in the user-generated content includes a plurality of URLs using a URL shortening service such as bit[.]ly and tinyuri[.]com. The URL shortening service is a service that converts a long URL into a short and simple URL and issues it. Many URL shortening services redirect to the original long URL by associating the long URL of another site with the short URL issued under the control of the own service when it accesses this short URL.

Therefore, the extraction unit 15g creates a Web crawler by combining, for example, Scrapy, which is a scraping framework, and Splash, a headless browser capable of rendering Javascript (registered trademark). Thus, the extraction unit 15g accesses the URL described in the user-generated content and records the communication information.

For example, the extraction unit 15g records the Web content of the website at which it finally arrives and the number of redirects. The number of redirects is 2 times and the Web contents of the final arrival website "malicious.com" are recorded in the case of a communication pattern in which transition is performed in this order of entrance URL "http://bit.ly/aaa" - "http://redirect.com/" → arrival URL "http://malicious.com."

Furthermore, the extraction unit 15g extracts the feature amount of the Web content such as the number of tags for each HTML of the arrival site, distributed representation of the character string displayed in the arrival site, the number of redirects, and the number of a fully qualified domain name (FQDN) transitioning from the entrance URL to the arrival URL. Here, the extraction unit 15g can extract the feature amount of the malicious user-generated content by using the tag recorded by HTML as the tag of Top30 which frequently appears in malicious sites.

Furthermore, the extraction unit 15g specifies the IP address of the FQDN at which it will finally arrive. In addition, the set of these user-generated contents is referred to as a similar user-generated content set when the extraction unit 15g reaches the same IP address from a plurality of services at the same time.

Also, the extraction unit 15g extracts the feature amount of the user-generated content such as the number of user-generated contents, the number of services, the number of entrance URLs, the number of users, the distributed representation of text, and the like for the set of similar user-generated contents.

The learning unit 15e performs learning using the extracted feature amount of the user-generated content generated by the legitimate user and the feature amount of the content generated by the malicious user. Furthermore, the determination unit 15f determines whether or not the user-generated content is generated by a malicious user using the learned model.

Specifically, the learning unit 15e performs supervised learning of a machine learning model using the feature amount related to the Web content of the extracted final arrival website and the feature amount related to the user-generated content generated at the same time. Furthermore, the determination unit 15f uses the learned machine learning model to determine whether or not the user-generated content of the service acquired thereafter is malicious.

In this way, the learning unit 15e learns the features of a user-generated content set having a high possibility of being malicious, which is generated in a similar context to at a specific timing such as an event and which describes a URL in which it arrives at the same IP address. Therefore, the determination unit 15f can use the learning result to perform determine the maliciousness determination of the user-generated content collected in real time.

Furthermore, the extraction unit 15g outputs the attack features of the user-generated content as threat information when it is determined that user-generated content is generated by a malicious user. Here, Figs. 11 and 12 are diagrams for describing threat information. The threat information includes, for example, a key phrase included in user-generated content, an entrance URL, an arrival URL, and the like described in the user-generated content of each service as shown in Fig. 11. User-generated content of service a and service b including the key phrase "rugby world cup," the entrance URL described in each, and the arrival URL common to services a and b are shown in the example shown in Fig. 11. The extraction unit 15g outputs the threat information to a predetermined providing destination via the output unit 12 or the communication control unit 13.

Specifically, as shown in Fig. 12, as threat information, attention calling such as a report to a providing destination, a blacklist, or the like is provided. In the example shown in Fig. 12, attention is being paid to user-generated content in the context including, for example, the words "regular holding (once a week), free, live broadcasting, and J-League" and the like. Particularly, attacker accounts and abused services which use this context have been reported. Furthermore, a blacklist including an entrance URL described in the user-generated content, a relay URL transitioning from the entrance URL, and an arrival URL at which it finally arrives from the relay URL is presented.

Furthermore, the fact that arrival URLs of malicious user-generated content in the above context and malicious user-generated content in the context including the words "regular holding (once every four years), free, live broadcasting, and Tokyo Olympics" and the like are a common malicious site is presented in the example shown in Fig. 12.

In this way, the extraction functional unit 15C performs a maliciousness determination using the feature amount obtained by accessing the entrance URL for user-generated content having a high possibility of maliciousness generated in large quantities in an arbitrary service at the same time. Further, the extraction functional unit 15C extracts threat information from the malicious user-generated content and outputs a threat report when it is determined that the content is malicious user-generated content. Thus, the extraction functional unit 15C can perform detecting in real time an attack which can be a threat among the user-generated content having a high possibility of maliciousness generated in large quantities in an arbitrary service at the same time and output the attack information.

Note that the extraction unit 15g may output attack features such as character strings and URLs included in the guidance context of the user-generated content as threat information when the above-mentioned determination functional unit 15B determines that the content is malicious user-generated content.

[Detection Process] Subsequently, the detection process using the detection device 1 according to the present embodiment will be described with reference to Figs. 13 to 17. First, Fig. 13 is a flowchart illustrating a collection processing procedure of the collection functional unit. The flowchart of Fig. 13 is started at the timing at which an operation is input by the user to give an instruction to start the process, for example.

First, the acquisition unit 15a acquires user-generated content generated in each service during a predetermined period (step S1). Specifically, the acquisition unit 15a acquires user-generated content from a server or the like of each service via the input unit 11 or the communication control unit 13.

Subsequently, the generation unit 15b generates a search query using words that appear in the user-generated content for each service. For example, the generation unit 15b generates a search query using a combination of words that appear (step S2).

Furthermore, the generation unit 15b calculates the degree of maliciousness of the search query for each service, and selects the search query whose calculated degree of maliciousness is equal to or higher than a threshold as the search query for the user-generated content that can be maliciousness for the service.

The collection unit 15c collects user-generated content generated in a predetermined service by using the selected search query (step S3). Thus, a series of collection processes ends.

Subsequently, Figs. 14 and 15 are flowcharts illustrating the processing procedure of the determination functional unit. First, the flowchart of Fig. 14 shows a learning process in the determination functional unit 15B and is started at the timing at which an operation is input by the user to give an instruction to start the process, for example.

The calculation unit 15d calculates the feature amount of the user-generated content of the predetermined service collected by the collection functional unit 15A in the predetermined period (step S4). Specifically, the calculation unit 15d calculates a text feature amount representing a feature of a combination of words co-occurring in a plurality of user-generated contents and a group feature amount representing a feature related to word similarity between a plurality of user-generated contents generated in a predetermined period.

Furthermore, the learning unit 15e performs learning using the calculated feature amount of the user-generated content generated by the legitimate user and the feature amount of the content generated by the malicious user (step S5). Thus, a series of learning processes ends.

Subsequently, the flowchart of Fig. 15 shows a determination process in the determination functional unit 15B and is started at the timing at which an operation is input by the user to give an instruction to start the process, for example.

The calculation unit 15d calculates the feature amount of the user-generated content of the predetermined service collected by the collection functional unit 15A in the predetermined period (step S4).

Subsequently, the determination unit 15f determines whether or not the user-generated content is generated by a malicious user using the learned model (step S6). Thus, a series of determination processes ends.

Furthermore, Figs. 16 and 17 are flowcharts illustrating the processing procedure of the extraction functional unit. First, the flowchart of Fig. 16 shows a learning process in the extraction functional unit 15C and is started at the timing at which an operation is input by the user to give an instruction to start the process, for example.

First, the extraction unit 15g accesses the entrance URL described in the user-generated content of a plurality of services collected by the collection functional unit 15A in a predetermined period and extracts the feature amount of the user-generated content (step S14). Specifically, the extraction unit 15g extracts the feature amount related to the Web content of the arrival website and the feature amount related to the plurality of user-generated contents generated in a predetermined period.

Furthermore, the learning unit 15e performs learning using the extracted feature amount of the user-generated content generated by the legitimate user and the feature amount of the content generated by the malicious user (step S5). Thus, a series of learning processes ends.

Subsequently, the flowchart of Fig. 17 shows a determination process in the extraction functional unit 15C and is started at the timing at which an operation is input by the user to give an instruction to start the process, for example.

First, the extraction unit 15g accesses the entrance URL described in the user-generated content of a plurality of services collected by the collection functional unit 15A in a predetermined period and extracts the feature amount of the user-generated content (step S14).

Furthermore, the determination unit 15f determines whether or not the user-generated content is generated by a malicious user using the learned model (step S6).

Also, the extraction unit 15g outputs the attack features of the user-generated content as threat information when the determination unit 15f determines that the user-generated content is generated by a malicious user (step S7). Thus, a series of determination processes ends.

Note that the process of step S7 may be performed after the process of step S6 shown in Fig. 15, as in the process of Fig. 17. That is, the extraction unit 15g may output the attack features of the user-generated content as threat information when the determination functional unit 15B determines that the user-generated content is generated by a malicious user.

As described above, in the collection functional unit 15A of the present embodiment, the acquisition unit 15a acquires the user-generated content generated in each service during a predetermined period. In addition, the generation unit 15b generates a search query using words that appear in user-generated content for each service. Further, the collection unit 15c collects user-generated content generated in a plurality of services by using the generated search query.

Thus, the collection functional unit 15A can efficiently collect user-generated content having a high possibility of maliciousness, which is spread in a similar context at a specific timing. As a result, the detection device 1 can detect a malicious site in a wide range quickly and with high accuracy.

In addition, the generation unit 15b selects a search query that can be malicious for each service. Thus, the collection functional unit 15A can easily and quickly collect user-generated content having a high possibility of being malicious for each service.

Furthermore, in the determination functional unit 15B, the calculation unit 15d calculates the feature amount of the user-generated content generated by the user in a predetermined period. Further, the learning unit 15e performs learning using the calculated feature amount of the user-generated content generated by the legitimate user and the feature amount of the content generated by the malicious user. Furthermore, the determination unit 15f determines whether or not the user-generated content is generated by a malicious user using the learned model.

Thus, the determination functional unit 15B can learn the features of the user-generated content generated at a specific timing such as an event and use the learning result to perform a maliciousness determination of the user-generated content collected in real time. In this way, the determination functional unit 15B can detect the malicious site quickly and with high accuracy.

Furthermore, the feature amount of the user-generated content calculated by the calculation unit 15d includes a text feature amount representing a feature of a combination of words co-occurring in a plurality of user-generated contents and a group feature amount representing a feature related to word similarity between a plurality of user-generated contents generated in a predetermined period.

Thus, the determination functional unit 15B can perform learning using the features of the user-generated content having a high possibility of maliciousness and can perform the maliciousness determination of the user-generated content collected in real time by using the learning result.

Furthermore, in the extraction functional unit 15C, the extraction unit 15g accesses the entrance URL described in the user-generated content generated by the user in a plurality of services during a predetermined period and extracts the feature amount of the user-generated content. Further, the learning unit 15e performs learning using the extracted feature amount of the user-generated content generated by the legitimate user and the feature amount of the content generated by the malicious user. Furthermore, the determination unit 15f determines whether or not the user-generated content is generated by a malicious user using the learned model.

Thus, the extraction functional unit 15C can perform a maliciousness determination of user-generated content collected in real time by using the features of user-generated content of various services generated at specific timings such as events. In this way, the extraction functional unit 15C can detect a malicious site in a wide range quickly and with high accuracy.

Furthermore, the feature amount extracted by the extraction unit 15g includes a feature amount related to the Web content of the arrival website and a feature amount related to a plurality of user-generated contents generated in a predetermined period. Thus, the extraction functional unit 15C can extract effective threat information of malicious sites.

Furthermore, the extraction unit 15g outputs the attack features of the user-generated content as threat information when it is determined that user-generated content is generated by a malicious user. Thus, the extraction functional unit 15C can present effective threat information of a malicious site to a predetermined providing destination.

Furthermore, in the detection device 1 of the present embodiment, the acquisition unit 15a acquires user-generated content generated in each service in a predetermined period. In addition, the generation unit 15b generates a search query using words that appear in user-generated content for each service. Further, the collection unit 15c collects user-generated content generated in a plurality of services by using the generated search query. In addition, the calculation unit 15d calculates the feature amount of the collected user-generated content of the predetermined service. Further, the learning unit 15e performs learning using the feature amount of the user-generated content generated by the legitimate user and the feature amount of the content generated by the malicious user. Furthermore, the determination unit 15f determines whether or not the user-generated content is generated by a malicious user using the learned model. Furthermore, the extraction unit 15g accesses the entrance URL described in the user-generated content and outputs the attack features of the user-generated content as threat information when it is determined that user-generated content is generated by a malicious user.

Thus, the detection device 1 can quickly detect malicious user-generated content by using the features of user-generated content generated at a specific timing such as an event and present effective threat information of a malicious site to a predetermined providing destination. In this way, the detection device 1 can quickly detect a malicious site in a wide range.

In addition, the generation unit 15b selects a search query that can be malicious for each service. Thus, the detection device 1 can easily collect user-generated content having a high possibility of maliciousness and detect malicious user-generated content more quickly.

Furthermore, the feature amount of the user-generated content calculated by the calculation unit 15d includes a text feature amount representing a feature of a combination of words co-occurring in a plurality of user-generated contents and a group feature amount representing a feature related to word similarity between a plurality of user-generated contents generated in a predetermined period. Thus, the detection device 1 can detect malicious user-generated content more quickly by targeting user-generated content having a high possibility of maliciousness.

Furthermore, the learning unit 15e performs learning using the feature amount of the user-generated content of the plurality of services extracted by the extraction unit 15g and the determination unit 15f determines whether or not the user-generated content of the plurality of services is generated by a malicious user using the learned model. Thus, it is possible to detect malicious user-generated content more quickly using the features of user-generated content of an arbitrary service.

Furthermore, the feature amount extracted by the extraction unit 15g includes a feature amount related to the Web content of the arrival website and a feature amount related to a plurality of user-generated contents generated in a predetermined period. Thus, the detection device 1 can present effective threat information of a malicious site to a predetermined providing destination.

[Program] It is also possible to create a program in which the processing executed by the detection device 1 according to the above embodiment is described in a language that can be executed by a computer. As one embodiment, the detection device 1 can be implemented by installing a detection program which executes the above detection process as package software or online software on a desired computer. For example, the information processing device can be constituted to function as the detection device 1 by causing the information processing device to execute the above detection program. The information processing device mentioned herein includes a desktop type or notebook type personal computer. In addition, information processing devices include smartphones, mobile communication terminals such as mobile phones and personal handyphone systems (PHSs), and slate terminals such as personal digital assistants (PDAs). Furthermore, the functions of the detection device 1 may be implemented in a cloud server.

Fig. 18 is a diagram illustrating an example of a computer for executing a detection program. A computer 1000 includes, for example, a memory 1010, a CPU 1020, a hard disk drive interface 1030, a disk drive interface 1040, a serial port interface 1050, a video adapter 1060, and a network interface 1070. These units are connected by a bus 1080.

The memory 1010 includes a read only memory (ROM) 1011 and a RAM 1012. The ROM 1011 stores, for example, a boot program, such as a basic input output system (BIOS). The hard disk drive interface 1030 is connected to a hard disk drive 1031. The disk drive interface 1040 is connected to a disk drive 1041. A detachable storage medium such as a magnetic disk or an optical disc, for example, is inserted into the disk drive 1041. A mouse 1051 and a keyboard 1052, for example, are connected to the serial port interface 1050. A display 1061, for example, is connected to the video adapter 1060.

Here, the hard disk drive 1031 stores, for example, an OS 1091, an application program 1092, a program module 1093, and program data 1094. Each of the pieces of information described in the above embodiment is stored in, for example, the hard disk drive 1031 or the memory 1010.

For example, the detection program is stored in the hard disk drive 1031 as the program module 1093 in which instructions executed by the computer 1000 are written. Specifically, the program module 1093 in which each piece of processing executed by the detection device 1 described in the above-mentioned embodiment is written is stored in the hard disk drive 1031.

Data used for information processing by the detection program is stored in, for example, the hard disk drive 1031 as the program data 1094. Then, the CPU 1020 reads the program module 1093 and the program data 1094 stored in the hard disk drive 1031 to the RAM 1012 as necessary, and executes each of the above-described procedures.

Note that the program module 1093 and the program data 1094 related to the detection program are not limited to those stored in the hard disk drive 1031 and may be stored in, for example, a removable storage medium and be read by the CPU 1020 via the disk drive 1041 or the like. Alternatively, the program module 1093 and the program data 1094 related to the detection program may be stored in another computer connected via a network such as a LAN or a wide area network (WAN) and be read by the CPU 1020 via the network interface 1070.

Although the embodiment to which the invention made by the present inventor has been applied has been described above, the present invention is not limited by the description and the drawings that form a part of the disclosure of the present invention according to the present embodiment. That is, other embodiments, examples, operational techniques, and the like made by those skilled in the art or the like on the basis of the present embodiment are all included in the category of the present invention. The invention is defined by the appended claims.

[Reference Signs List]

1 Detection device
11 Input unit
12 Output unit
13 Communication control unit
14 Storage unit
15 Control unit
15A Collection functional unit
15B Determination functional unit
15C Extraction functional unit
15a Acquisition unit
15b Generation unit
15c Collection unit
15d Calculation unit
15e Learning unit
15f Determination unit
15g Extraction unit

**Claims**

1. A collection device comprising:

   an acquisition unit (15a) configured to acquire user-generated content for a predetermined service in a predetermined period;
   a generation unit (15b) configured to generate a search query by using words that appear in the acquired user-generated content for the predetermined service and configured to calculate a degree of maliciousness of the search query as a ratio of the number of user-generated contents searched using the search query and determined to be malicious, to the number of user-generated contents searched using the search query and determined to be malicious or benign; and
   a collection unit (15c) configured to collect user-generated content generated in a plurality of services by using the generated search query, if the degree of maliciousness of the search query is larger than a threshold.

2. The collection device according to claim 1, wherein the generation unit (15b) generates the search query by using a combination of words that appear.

3. The collection device according to claim 1, wherein the generation unit (15b) generates the search query by using a frequency of appearance of each word.

4. The collection device according to claim 1, wherein the generation unit (15b) selects the search query that is able to be malicious for each service.

5. A collection method which is executed by a collection device, the collection method comprising:

   an acquisition step of acquiring user-generated content generated for a predetermined service in a predetermined period;
   a generation step of generating a search query by using words that appear in the user-generated content for the predetermined service and of calculating a degree of maliciousness of the search query as a ratio of the number of user-generated contents searched using the search query and determined to be malicious, to the number of user-generated contents searched using the search query and determined to be malicious or benign; and
   a collection step of collecting user-generated content generated in a plurality of services by using the generated search query, if the degree of maliciousness of the search query is larger than a threshold.

6. A collection program that causes a computer (1000) to execute:

   an acquisition step of acquiring user-generated content generated for a predetermined service in a predetermined period;
   a generation step of generating a search query by using words that appear in the user-generated content for the predetermined service and of calculating a degree of maliciousness of the search query as a ratio of the number of user-generated contents searched using the search query and determined to be malicious, to the number of user-generated contents searched using the search query and determined to be malicious or benign; and
   a collection step of collecting user-generated content generated in a plurality of services by using the generated search query, if the degree of maliciousness of the search query is larger than a threshold.

**Patentansprüche**

1. Sammelvorrichtung, die umfasst:

   eine Erfassungseinheit (15a), die so konfiguriert ist, dass sie benutzererzeugte Inhalte für einen vorbestimmten Dienst in einem vorbestimmten Zeitraum erfasst;
   eine Erzeugungseinheit (15b), die so konfiguriert ist, dass sie eine Suchanfrage unter Verwendung von Wörtern erzeugt, die in den erfassten benutzererzeugten Inhalten für den vorbestimmten Dienst erscheinen, und so konfiguriert ist, dass sie einen Grad der Bösartigkeit der Suchanfrage als ein Verhältnis der Anzahl von benutzererzeugten Inhalten, die unter Verwendung der Suchanfrage gesucht und als bösartig bestimmt wurden, zu der Anzahl von benutzererzeugten Inhalten, die unter Verwendung der Suchanfrage gesucht und als bösartig oder gutartig bestimmt wurden, berechnet; und

eine Sammeleinheit (15c), die so konfiguriert ist, dass sie benutzererzeugte Inhalte sammelt, die in einer Vielzahl von Diensten unter Verwendung der erzeugten Suchanfrage erzeugt wurden, wenn der Grad der Bösartigkeit der Suchanfrage größer als ein Schwellenwert ist.

2. Sammelvorrichtung nach Anspruch 1, wobei die Erzeugungseinheit (15b) die Suchanfrage unter Verwendung einer Kombination von Wörtern erzeugt, die erscheinen.

3. Sammelvorrichtung nach Anspruch 1, wobei die Erzeugungseinheit (15b) die Suchanfrage unter Verwendung einer Häufigkeit des Auftretens jedes Worts erzeugt.

4. Sammelvorrichtung nach Anspruch 1, wobei die Erzeugungseinheit (15b) die Suchanfrage auswählt, die für jeden Dienst bösartig sein kann.

5. Sammelverfahren, das von einer Sammelvorrichtung ausgeführt wird, wobei das Sammelverfahren umfasst:

einen Erfassungsschritt des Erfassens von benutzererzeugten Inhalten, die für einen vorbestimmten Dienst in einem vorbestimmten Zeitraum erzeugt wurden;

einen Erzeugungsschritt des Erzeugens einer Suchanfrage unter Verwendung von Wörtern, die in den benutzererzeugten Inhalten für den vorbestimmten Dienst erscheinen, und des Berechnens eines Grades der Bösartigkeit der Suchanfrage als ein Verhältnis der Anzahl von benutzererzeugten Inhalten, die unter Verwendung der Suchanfrage gesucht und als bösartig bestimmt wurden, zu der Anzahl von benutzererzeugten Inhalten, die unter Verwendung der Suchanfrage gesucht und als bösartig oder gutartig bestimmt wurden; und

einen Sammelschritt des Sammelns von benutzererzeugten Inhalten, die in einer Vielzahl von Diensten unter Verwendung der erzeugten Suchanfrage erzeugt wurden, wenn der Grad der Bösartigkeit der Suchanfrage größer als ein Schwellenwert ist.

6. Sammelprogramm, das einen Computer (1000) veranlasst, auszuführen:

einen Erfassungsschritt des Erfassens von benutzererzeugten Inhalten, die für einen vorbestimmten Dienst in einem vorbestimmten Zeitraum erzeugt wurden;

einen Erzeugungsschritt des Erzeugens einer Suchanfrage unter Verwendung von Wörtern, die in den benutzererzeugten Inhalten für den vorbestimmten Dienst erscheinen, und des Berechnens eines Grades der Bösartigkeit der Suchanfrage als ein Verhältnis der Anzahl von benutzererzeugten Inhalten, die unter Verwendung der Suchanfrage gesucht und als bösartig bestimmt wurden, zu der Anzahl von benutzererzeugten Inhalten, die unter Verwendung der Suchanfrage gesucht und als bösartig oder gutartig bestimmt wurden; und

einen Sammelschritt des Sammelns von benutzererzeugten Inhalten, die in einer Vielzahl von Diensten unter Verwendung der erzeugten Suchanfrage erzeugt wurden, wenn der Grad der Bösartigkeit der Suchanfrage größer als ein Schwellenwert ist.


**Revendications**

1. Dispositif de collecte comprenant :

une unité d'acquisition (15a) configurée pour acquérir du contenu généré par un utilisateur pour un service prédéterminé sur une période prédéterminée ;

une unité de génération (15b) configurée pour générer une requête de recherche en utilisant des mots qui apparaissent dans le contenu généré par l'utilisateur et acquis pour le service prédéterminé et configurée pour calculer un degré de malveillance de la requête de recherche sous la forme d'un rapport du nombre de contenus générés par l'utilisateur recherchés à l'aide de la requête de recherche et déterminés comme étant malveillants, sur le nombre de contenus générés par l'utilisateur et recherchés à l'aide de la requête de recherche et déterminés comme étant malveillants ou bénins ; et

une unité de collecte (15c) configurée pour collecter du contenu généré par l'utilisateur, généré dans une pluralité de services en utilisant la requête de recherche générée, si le degré de malveillance de la requête de recherche est supérieur à un seuil.

**2.** Dispositif de collecte selon la revendication 1, dans lequel l'unité de génération (15b) génère la requête de recherche en utilisant une combinaison de mots qui apparaissent.

**3.** Dispositif de collecte selon la revendication 1 dans lequel l'unité de génération (15b) génère la requête de recherche en utilisant une fréquence d'apparence de chaque mot.

**4.** Dispositif de collecte selon la revendication 1, dans lequel l'unité de génération (15b) sélectionne la requête de recherche qui peut être malveillante pour chaque service.

**5.** Procédé de collecte qui est exécuté par un dispositif de collecte, le procédé de collecte comprenant :

une étape d'acquisition destinée à acquérir du contenu généré par un utilisateur généré pour un service prédéterminé dans une période prédéterminée ;
une étape de génération destinée à générer une requête de recherche en utilisant des mots qui apparaissent dans le contenu généré par l'utilisateur pour le service prédéterminé et à calculer un degré de malveillance de la requête de recherche sous la forme d'un rapport du nombre de contenus générés par l'utilisateur recherchés en utilisant la requête de recherche et déterminés comme étant malveillants, sur le nombre de contenus générés par l'utilisateur et recherchés à l'aide de la requête de recherche et déterminés comme étant malveillants ou bénins ; et
une unité de collecte destinée à collecter du contenu généré par l'utilisateur généré dans une pluralité de services en utilisant la requête de recherche générée, si le degré de malveillance de la requête de recherche est supérieur à un seuil.

**6.** Programme de collecte qui amène un ordinateur (1000) à exécuter :

une étape d'acquisition destinée à acquérir du contenu généré par un utilisateur généré pour un service prédéterminé sur une période prédéterminée ;
une étape de génération destinée à générer une requête de recherche en utilisant des mots qui apparaissent dans le contenu généré par l'utilisateur pour le service prédéterminé et à calculer un degré de malveillance de la requête de recherche sous la forme d'un rapport du nombre de contenus générés par l'utilisateur recherchés en utilisant la requête de recherche et déterminés comme étant malveillants, sur le nombre de contenus générés par l'utilisateur et recherchés à l'aide de la requête de recherche et déterminés comme étant malveillants ou bénins ; et
une unité de collecte destinée à collecter du contenu généré par l'utilisateur généré dans une pluralité de services en utilisant la requête de recherche générée, si le degré de malveillance de la requête de recherche est supérieur à un seuil.

Fig. 1

USER-GENERATED CONTENT

Free Live Click Here
http://streaming.test

W W W

COLLECT LARGE
AMOUNT OF CONTENT
IN WHICH URL EXISTS

REPORT THREAT
INFORMATION ACCORDING
TO PROVIDING DESTINATION

1

COLLECTION

THREAT
EXTRACTION

ANALYSIS

PERFORM ANALYSIS
IMMEDIATELY AFTER SPREADING

THREAT REPORT

SERVICE

· ATTACKER
  ACCOUNT
· MALICIOUS URL
· MALICIOUS
  DOMAIN NAME

ACCOUNT
FREEZING

EVENT OPERATOR

·ABUSE INFORMATION
·ASSUMED DAMAGE
·MALICIOUS URL
·MALICIOUS DOMAIN
 NAME

ATTENTION
CALLING

SECURITY OPERATION CENTER

·MALICIOUS URL
·MALICIOUS
 DOMAIN NAME
·MALICIOUS IP ADDRESS
·COMMUNICATION
 PATTERN

COMMUNICATION
INTERRUPTION

Fig. 2

Fig. 3

COLLECT 1.5
MILLION/h OF
TWEETS WITH URL

COLLECT 1000 QUERIES/h IN
OTHER SERVICES

ANALYSIS

SERVICE

SEARCH QUERY

Free Stream Rugby

iPhone Giveaways

Live Streaming Soccer

SERVICE a

SERVICE b

SERVICE c

Free Live Click Here
http://streaming.test

USER-GENERATED
CONTENT

MALICIOUS USER-GENERATED
CONTENT

Free Live Click Here
http://evil.test

EXTRACT KEY
PHRASES

Fig. 4

Japan vs United States Free live streaming click here
(japan vs united, vs united states, united states free, states free live,
free live streaming, live streaming click,  streaming click here)

Fig. 5

PERFORM LEARNING USING RESPECTIVE CO-OCCURRENCES OF WORDS 1-gram AND 2-gram INCLUDED IN SENTENCE AS FEATURE

ATTACKER

free live here

click here live

TEXT FEATURE AMOUNT

**Aa**

FOCUS ON DIFFERENCE BETWEEN FEATURES OF CONTENT GENERATED BY ATTACKER AND LEGITIMATE USER

PERFORM AGGREGATION USING SIMILARITY OF WORD 1-gram INCLUDED IN SENTENCE, AND PERFORM LEARNING USING SIZE OF GROUP OR THE LIKE AS FEATURE

LEARNING FUNCTION MODEL

good live stage

nice live stage

LEGITIMATE USER

GROUP FEATURE AMOUNT

Fig. 6

Fig. 7

Input: USER-GENERATED CONTENT SET U
Output: TEXT FEATURE AMOUNT SET T
  for $u \in U$ do
    URL EXISTING IN $URL_u=u$, TEXT OF $TEXT_u=u$
    $URL_u \Leftarrow$ WordSegmentation($URL_u$)
    VEC=WordEmbeddings($TEXT_u, URL_u$)

$$t= \frac{1}{sizeOf(VEC)} \sum\nolimits_{i=1}^{sizeOf\ (VEC)} VEC_i$$

  t append to T
return T

Fig. 8

Input: USER-GENERATED CONTENT SET U, TIME THRESHOLD $\sigma$, SIMILARITY THRESHOLD $\tau$
Output: GROUP FEATURE AMOUNT SET G
  for $u \in U$ do
    POSTED DATE AND TIME OF $Time_u$=u
    $U_{near}$=GroupNearTimePost(U,$Time_u$, $\sigma$ )
    $U_{sim}$=Minhash−LSH($U_{near}$, $\tau$ )
    g=CreateGroupFeatures($U_{sim}$)
    g append to G
  return G

Fig. 9

1.Free live streaming URL1 URL1 @user1
  SAME GROUP: 2, 3, AVERAGE POSTING TIME INTERVAL OF 1, 2, 3, SET SIZE 3, NUMBER OF UNIQUE USERS
  OF SET 2, URL UNIQUE NUMBER OF SET 2, AND AVERAGE NUMBER OF URLS FOR ONE CONTENT 1.67
2.Live Streaming Japan URL1 URL2 @user2
  SAME GROUP: 1, 3, AVERAGE POSTING TIME INTERVALS OF 1, 2, 3, SET SIZE 3, NUMBER OF UNIQUE USERS
  OF SET 2, URL UNIQUE NUMBER OF SET 2, AND AVERAGE NUMBER OF URLS FOR ONE CONTENT 1.67
3.Live Streaming Free URL1 @user2
  SAME GROUP: 1, 2, AVERAGE POSTING TIME INTERVALS OF 1, 2, 3, SET SIZE 3, THE NUMBER OF UNIQUE
  USERS OF SET 2, URL UNIQUE NUMBER OF SET 2, AND AVERAGE NUMBER OF URLS FOR ONE CONTENT 1.67
4.Free iPhone Giveways URL3 @user3
  SAME GROUP: 4, 5, AVERAGE POSTING TIME INTERVALS OF 4, 5, SET SIZE 2, NUMBER OF UNIQUE USERS
  OF SET 1, URL UNIQUE NUMBER OF SET 2, AND AVERAGE NUMBER OF URLS FOR ONE CONTENT 1
5.iPhone Giveways URL4 @user3
  SAME GROUP: 4, 5, AVERAGE POSTING TIME INTERVALS OF 4, 5, SET SIZE 2, NUMBER OF UNIQUE USERS
  OF SET 1, URL UNIQUE NUMBER OF SET 2, AND AVERAGE NUMBER OF URLS FOR ONE CONTENT 1
6.Trump President Party URL5 @user4
  THERE IS NO SAME GROUP
7.Corona Virus NEWS Sites URL6 @user5
  THERE IS NO SAME GROUP

Fig. 10

SEARCH QUERY  2019/11/02 18:10

| Free Stream Rugby |

2019/11/02 18:02      2019/11/02 18:03      2019/11/02 18:05

Free Stream Rugby
http://bit.ly/XXX

Rugby Streaming
http://ow.ly/YY

Free Live Rugby
http://goo.gl/ZZZ

redirect.test/
live.php?match=Y

redirect.example/
live.php?match=X

ARRIVE AT SAME IP ADDRESS
FROM A PLURALITY OF
SERVICES AT SAME TIME

livestream.test

FINAL ARRIVAL FQDN

Fig. 11

CONTENT IN WHICH CHARACTER STRING "rugby world cup" IS INCLUDED

SERVICE a:
Text:England vs Argentina LIVE: Rugby World Cup updates as...England take on Argentina in the Rugby World Cup and Express...England vs Argentina LIVE:Rugby World Cup updates as Eddie...Rugby World Cup free live stream LIVE>> http://bit[.]ly/rugby-world-cup-
Username: coinmaster547 PostDate: 2019/10/05
URL:https://twitter.com/coinmaster547/status/1180417464464596993

SERVICE b:
Text:https://pbr-2019-4k.blogpot[.]com/ Rugby World Cup 2019 Rugby World Cup 2019:TV channel,time,live stream Information.Watch Rugby World Cup 2019 Game On ITV,Sky Sports,BT Sport,Eurosport and more.
Username:Steamz-Net-Zone-117898112929759 PostDate:2019/9/20
URL:https://www.facebook.com/events/tokyo-stadium/rugby-warld-cup-2019-live-stream-free/2144180735879174/

ARRIVAL URL:
https://watchhdlivetv[.]online/PBR
https://sportshdstream[.]com/4k2/index.html?a=2&clickid=5e79a6da0a5df40001216799&pubid=6018&bg2=rugbyb.jpeg&bg1=rugbyb.jpeg&q=Unlimited%20Live%20Rugby

Fig. 12

**ATTENTION CALLING**

**REPORT**

CONTEXT

**REGULAR HOLDING (ONCE A WEEK)**

LIVE
FREE BROADCASTING J LEAGUE

SERVICE

ATTACKER ACCOUNT

**BLACKLIST**

ENTRANCE URL

https://bit[.]ly/jleaguelive
https://t[.]co/jleaguelive

RELAY URL

https://redirect[.]test/jlive.php
https://redirect[.]example/jlive.php

ARRIVAL URL

https://stream24[.]test/soccer.php
https://stream24[.]example/soccer.php

**ATTENTION CALLING**

**REPORT**

CONTEXT

**REGULAR HOLDING (ONCE EVERY FOUR YEARS)**

LIVE        TOKYO
FREE BROADCASTING OLYMPICS

SERVICE

ATTACKER ACCOUNT

**BLACKLIST**

ENTRANCE URL

https://bit[.]ly/tokyo2020
https://t[.]co/tokyo2020

RELAY URL

https://redirect[.]test/soccer.php
https://redirect[.]example/soccer.php

ARRIVAL URL

https://stream24[.]test/soccer.php
https://stream24[.]example/soccer.php

**SHARE ARRIVAL URL**

Fig. 13

```
                    ┌─────────────┐
                    │    START    │
                    └──────┬──────┘
                           ↓
        ┌──────────────────────────────────────┐
        │ ACQUIRE USER-GENERATED CONTENT FOR    │ ～ S1
        │        PREDETERMINED PERIOD           │
        └──────────────────┬───────────────────┘
                           ↓
        ┌──────────────────────────────────────┐
        │         GENERATE SEARCH QUERY         │ ～ S2
        └──────────────────┬───────────────────┘
                           ↓
        ┌──────────────────────────────────────┐
        │      COLLECT USER-GENERATED CONTENT   │ ～ S3
        └──────────────────┬───────────────────┘
                           ↓
                    ┌─────────────┐
                    │     END     │
                    └─────────────┘
```

Fig. 14

```
          ┌─────────────┐
          │    START    │
          └──────┬──────┘
                 │
                 ▼
  ┌────────────────────────────────────────┐
  │      CALCULATE FEATURE AMOUNT OF        │
  │  USER-GENERATED CONTENT IN PREDETERMINED│──── S4
  │                 SERVICE                 │
  └────────────────────┬───────────────────┘
                       │
                       ▼
  ┌────────────────────────────────────────┐
  │  PERFORM LEARNING USING FEATURE AMOUNT OF│
  │   LEGITIMATE USER-GENERATED CONTENT AND │
  │       FEATURE AMOUNT OF MALICIOUS       │──── S5
  │         USER-GENERATED CONTENT          │
  └────────────────────┬───────────────────┘
                       │
                       ▼
          ┌─────────────┐
          │     END     │
          └─────────────┘
```

Fig. 15

```
         ┌─────────────┐
         │    START    │
         └──────┬──────┘
                │
                ▼
┌────────────────────────────────────────┐
│       CALCULATE FEATURE AMOUNT OF       │
│ USER-GENERATED CONTENT IN PREDETERMINED │ ～S4
│                 SERVICE                 │
└────────────────────┬───────────────────┘
                     │
                     ▼
┌────────────────────────────────────────┐
│ DETERMINE WHETHER OR NOT USER-GENERATED │ ～S6
│  CONTENT IS GENERATED BY MALICIOUS USER │
└────────────────────┬───────────────────┘
                     │
                     ▼
              ┌─────────────┐
              │     END     │
              └─────────────┘
```

Fig. 16

```
              ┌─────────────┐
              │    START    │
              └──────┬──────┘
                     │
                     ▼
  ┌──────────────────────────────────────┐
  │   ACCESS URL AND EXTRACT FEATURE AMOUNT │ ── S14
  │      OF USER-GENERATED CONTENT          │
  └──────────────────┬───────────────────┘
                     │
                     ▼
  ┌──────────────────────────────────────┐
  │  PERFORM LEARNING USING FEATURE AMOUNT OF │
  │   LEGITIMATE USER-GENERATED CONTENT AND   │ ── S5
  │       FEATURE AMOUNT OF MALICIOUS         │
  │       USER-GENERATED CONTENT              │
  └──────────────────┬───────────────────┘
                     │
                     ▼
              ┌─────────────┐
              │     END     │
              └─────────────┘
```

Fig. 17

```
        ┌─────────────┐
        │    START    │
        └──────┬──────┘
               │
               ▼
┌───────────────────────────────────────┐
│ ACCESS URL AND EXTRACT FEATURE AMOUNT OF │ ── S14
│        USER-GENERATED CONTENT          │
└───────────────────┬───────────────────┘
                    │
                    ▼
┌───────────────────────────────────────┐
│ DETERMINE WHETHER OR NOT USER-GENERATED │ ── S6
│ CONTENT IS GENERATED BY MALICIOUS USER │
└───────────────────┬───────────────────┘
                    │
                    ▼
┌───────────────────────────────────────┐
│         OUTPUT THREAT INFORMATION       │ ── S7
└───────────────────┬───────────────────┘
                    │
                    ▼
        ┌─────────────┐
        │     END     │
        └─────────────┘
```

Fig. 18

**EP 4 213 044 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130179421 A1
- CN 109472027 A
- US 2020234109 A1
- US 9083729 B1

**Non-patent literature cited in the description**

- **LUCA INVERNIZZI ; PAOLO MILANI COMPARET-TI.** *EVILSEED: A Guided Approach to Finding Malicious Web Pages,* 27 July 2020, URL:https://sites.cs.ucsb.edu/~vigna/publications/2012_SP_Evilseed.pdf